# EUROPEAN PATENT APPLICATION

(11) **EP 4 783 124 A1**
(43) Date of publication of application: **29.07.2026**
(21) Application number: 25290005.5
(22) Date of filing: 24.01.2025
(51) Int. Cl.: G06V 20/56

(54) **METHODS, APPARATUS AND SYSTEMS FOR AUTOMATIC ANNOTATION OF ROAD RELATED PIXELS IN AN IMAGE**

(71) Applicant: Astemo, Ltd., Tokyo 100-0004 (JP)
(72) Inventor: Ahrabian, Alireza, London, EC2Y 5AJ (GB); Nguyen, Quan, 06560 Valbonne (FR)
(74) Representative: MERH-IP Matias Erny Reichl Hoffmann Patentanwälte PartG mbB

(57) **Abstract**

Methods, apparatus, programs, and storage media for improving automated generation of annotated images are described. The method includes obtaining the image, wherein the image comprises a road. Positional data of a camera that has produced the image is obtained. Coordinates of road lane boundaries are obtained. The road lane boundaries are projected onto the image based on the coordinates of the road lane boundaries and the positional data of the camera. An annotated image is generated by annotating each pixel of the image inside the projected road lane boundaries as the drivable road. The annotated image is provided for further processing.

## Description

The present disclosure relates to annotation of road surfaces in an image and more particular to automated road related pixel annotation methods and devices.

Detecting drivable road surfaces in images is a critical task for various applications, including autonomous vehicles, traffic management systems, and urban planning. However, developing accurate drivable road surface detection algorithms often relies on supervised machine learning models, such as neural networks, which require substantial amounts of annotated training data. Annotating drivable road surfaces in images poses significant challenges that can impede the development of effective models.

One major challenge is the variability of road surfaces. Roads appear in different shapes, colors, and textures, depending on factors such as material (e.g., asphalt, concrete, gravel), weather conditions (e.g., wet, dry, snowy), and environmental lighting (e.g., bright daylight, dusk, nighttime). Capturing and correctly labeling these variations across diverse geographic locations and scenarios is a labor-intensive task.

Another issue arises from complex visual scenes. Images of roadways often contain occlusions caused by vehicles, pedestrians, or vegetation. Road markings, such as lanes and pedestrian crossings, as well as adjacent areas like curbs, sidewalks, or unpaved shoulders, add to the complexity of distinguishing road surfaces from other elements in the scene. Precise annotation in such cases requires highly skilled human annotators and consumes considerable time and resources.

Furthermore, subjective interpretations and inconsistencies in manual labeling can affect the quality of the annotated data. Annotators may vary in their understanding of where the road surface begins and ends, particularly in edge cases, such as partially visible or poorly defined roads. Such inconsistencies can reduce the reliability of the dataset and lead to suboptimal neural network performance.

Finally, the process of annotating road surfaces in images is not easily scalable. High-resolution images captured from various camera systems necessitate meticulous attention to detail, making manual annotation both time-consuming and costly.

Further, current automated annotation tools often lack the precision needed to generate high-quality labels without significant manual intervention.

These challenges underscore the need for innovative solutions that streamline the annotation process, improve labeling accuracy, and ensure the generation of robust training datasets for neural networks. Overcoming these issues will be crucial for advancing the state of road surface detection and enabling more reliable deployment in real-world applications.

Thus, there is a need for an automated annotation process that is efficient and at the same time improves the labeling accuracy such that training data for a road detecting neural network can be efficiently generated.

In view of the above, the present disclosure provides methods, apparatus, and programs, as well as computer-readable storage media for annotation of drivable road surface pixels in an image.

According to an aspect of the disclosure, a method of annotating pixels of an image corresponding to a drivable road is provided. The image may be obtained (e.g., received). The image may comprise a road or at least a part of a road. Positional data of a camera that has produced the image may be obtained (e.g., received). Coordinates (global coordinates) of road lane boundaries may be obtained (e.g., received or extracted). Obtaining the coordinates of the road lane boundaries may be based on the positional data of the camera. The coordinates of the road lane boundaries may be obtained from High Definition (HD) map data. The road lane boundaries may be projected onto the image based on the coordinates of the lane boundaries and the positional data of the camera. An annotated image may be generated by annotating (e.g. marking or adding metadata) each pixel of the image inside the projected road lane boundaries as the drivable road. The annotated image may be provided for further processing.

By using precise coordinates of road lane boundaries, image data and positional data related to the image, a drivable road surface can be annotated efficiently and reliably in an image.

In some embodiments, providing the annotated image for further processing includes providing the annotated image as training data for a drivable road detection neural network.

By using the automated process for generating training data for the neural network, the neural network can be trained based on a large amount of reliable training data.

In some embodiments, the camera may be part of a road vehicle or part of a roadside entity.

In some embodiments, the positional data of the camera may include global coordinates of the camera, a direction of the camera and a height of the camera. The height of the camera may be indicated directly or through a relative height in a corresponding vehicle or a roadside entity.

In some embodiments, projecting the road lane boundaries onto the image based on the coordinates of the road lane boundaries and the positional data of the camera may include determining an (virtual) image plane based on the positional data of the camera. The virtual image plane may correspond to a perspective of the image. Further, the road lane boundaries may be projected onto the (virtual) image plane based on the positional data of the camera and the coordinates of the road lane boundaries.

In some embodiments, projecting the road lane boundaries onto the image plane is further based on radial distortions of the camera. Further, other distortions affecting the projection of the road lane boundary onto the image plane may be considered as well.

In some embodiments, determining the (virtual) image plane based on the positional data of the camera may be further based on a focal length of the camera (i.e., a focal length of the lens system included in the camera).

In some embodiments, annotating each pixel of the image inside the projected road lane boundaries as the drivable road comprises annotating a pixel of the image as the drivable road if the pixel is between two projected road lane boundaries of a same road lane.

In some embodiments, annotating each pixel of the image inside the projected road lane boundaries as the drivable road may further include determining an obstacle on the drivable road. Further, each pixel corresponding to the obstacle may be excluded from the annotated pixels (e.g., either before the original annotation or after the original annotation).

In some embodiments, determining an obstacle on the drivable road may include a depth estimation algorithm. The depth estimation algorithm may include determining an estimated depth of an annotated pixel based on the image (an estimate of a distance of the object to the camera). Further, an expected depth of the annotated pixel may be determined based on the projected road lane boundaries (an estimate of a distance from the camera to the road surface without the object/obstacle). The estimated depth may be compared to the expected depth to determine whether an obstacle exists on the drivable road. Determination whether an obstacle exists on the drivable road may be based on a threshold, .e.g., a tunable threshold. In other words, when the difference between the estimated distance to the road surface (without the obstacle) and the estimated distance to the object exceeds the threshold, it may be determined that an obstacle exists on the drivable road surface.

By including an obstacle detection based on depth estimation, a drivable road surface can be automatically annotated in an image, even when obstacles are positioned on the drivable road surface.

In some embodiments, excluding each pixel corresponding to the obstacle from the annotated pixels may include specifying a save zone around the object and excluding the corresponding pixels from being annotated as drivable road surface. Further, excluding each pixel corresponding to the obstacle from the annotated pixels may further be based on estimated height and depth of the obstacle.

In some embodiments, determining the estimated depth may be further based on a second image from a second camera. The second image and the image may form stereo images. Alternatively, determining the estimated depth may be further based on LIDAR data of an environment captured in the image.

Aspects of the present disclosure may be implemented via an apparatus. The apparatus may include a processor and memory coupled to the processor. The processor may be adapted to carry out the method according to aspects and embodiments of the present disclosure.

In some embodiments, the apparatus may be part of a server, a road vehicle or a roadside entity.

Aspects of the present disclosure may be implemented via a system. The system may comprise a cloud infrastructure including the apparatus for carrying out the method according to aspects and embodiments of the present disclosure. The system may further comprise a road vehicle including a camera for generating the image and the corresponding positional data. The road vehicle may transmit the image and the positional data of the camera that has produced the image to the cloud infrastructure.

Aspects of the present disclosure may be implemented via a program. When instructions of the program are executed by a processor, the processor may carry out aspects and embodiments of the present disclosure. A computer-readable storage medium may store the program. Such computer-readable storage media may include memory devices such as those described herein, including but not limited to random access memory (RAM) devices, read-only memory (ROM) devices, etc.. Accordingly, some innovative aspects of the subject matter described in this disclosure can be implemented via one or more computer-readable storage media having software stored thereon.

It will be appreciated that apparatus features and method steps may be interchanged in many ways. In particular, the details of the disclosed method(s) can be realized by the corresponding apparatus (or system), and vice versa, as the skilled person will appreciate. Moreover, any of the above statements made with respect to the method(s) are understood to likewise apply to the corresponding apparatus (or system), and vice versa.

### BRIEF DESCRIPTION OF DRAWINGS

Example embodiments of the disclosure are explained below with reference to the accompanying drawings, wherein
Fig. 1 is a flowchart illustrating an example of a method of annotating road surface related pixels in an image according to embodiments of the disclosure,
Figs. 2 a) to c) schematically illustrate how an image and HD-Map information may be used for determining a drivable road surface in the image according to embodiments of the disclosure,
Fig. 3 is a flowchart illustrating an example of a method of determining an obstacle on the drivable road surface according to embodiments of the disclosure,
Fig. 4 schematically illustrates a determination of an expected depth of a pixel for determining an obstacle on the drivable surface according to embodiments of the disclosure,
Fig. 5 schematically illustrates an example of an apparatus for annotating road related pixels in an image according to embodiments of the disclosure, and
Fig. 6 schematically illustrates an example of a system for annotating road related pixels in an image according to embodiments of the disclosure.

### Examples of the disclosed subject matter

The Figures (Figs.) and the following description relate to preferred embodiments by way of illustration only. It should be noted that from the following discussion, alternative embodiments of the structures and methods disclosed herein will be readily recognized as viable alternatives that may be employed without departing from the principles of what is claimed.

Reference will now be made in detail to several embodiments, examples of which are illustrated in the accompanying figures. It is noted that wherever practicable similar or like reference numbers may be used in the figures and may indicate similar or like functionality. The figures depict embodiments of the disclosed system (or method) for purposes of illustration only. One skilled in the art will readily recognize from the following description that alternative embodiments of the structures and methods illustrated herein may be employed without departing from the principles described herein.

Training a neural network for detecting a drivable road surface needs a large amount of varying training data, i.e., images containing a road and corresponding images where a drivable road surface is annotated in some way, e.g., by adding metadata in which each pixel corresponding to a drivable road surface can be identified.

For automatically generating said annotated images, map data had been too unprecise in order to be used for determining road markings such as road lane boundaries in an image showing the road.

However, with the advent of HD maps, a precision may be high enough for using the coordinates of the road markings for automated drivable road surface annotation in images.

HD maps are designed to meet the precision demands of advanced navigation and autonomous driving systems. Unlike traditional maps used for human navigation, HD maps provide an unparalleled level of detail, accuracy, and contextual information essential for machine-based interpretation.

These maps go beyond basic street layouts and landmarks, incorporating precise 3D representations of roads, lanes, curbs, road markings, traffic signs, and even dynamic elements like signal phases. With centimeter-level accuracy, HD maps are a critical component in many applications.

By leveraging data from LiDAR, radar, cameras, and other sensor technologies, HD maps are constructed as multi-layered representations. Notably, HD maps include a geometry layer for exact spatial measurements of roads and their features. These road features, such as road lane boundaries, have global coordinates attached to them. In the following, these precise coordinates of road level boundaries will be used for automatically annotating pixels related to a drivable road surface in an image.

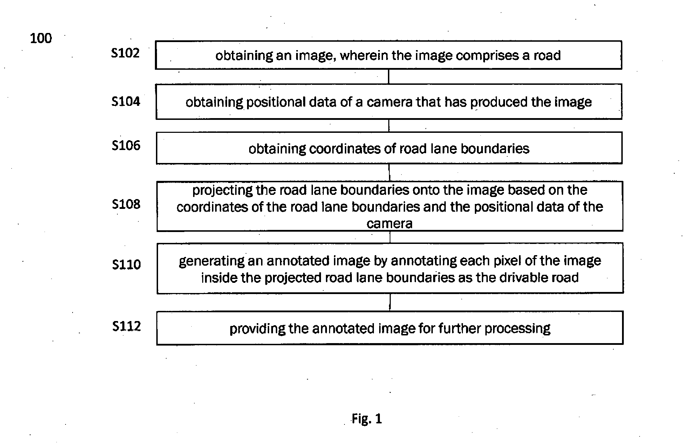

Fig. 1 depicts a flowchart of an example method 100 for annotating pixels related to a drivable road surface in an image.

In step S102, an image is obtained. The image shows at least a part of a road. The image may be received from a remote entity containing a camera for capturing the image. The remote entity may be road vehicle or a roadside entity. Alternatively, the image may be received from a sever for storing road related images.

In step S104, positional data of a camera that captured the image is obtained. The positional data of the camera may correspond to positional data of the camera at the moment of capturing the image. When the image is received from the remote entity or the sever, the positional data may be attached to the image as metadata. The positional data may comprise coordinates of the camera. The coordinates may be global coordinates, e.g., GPS coordinates.

The positional data may further comprise a height of the camera, i.e., a distance to the ground. Alternatively, a height of the camera may be fixed or known. For example, a camera may be installed at a fixed height in a road vehicle or in roadside infrastructure. In another example, a height of a road vehicle and a relative position of the camera inside the road vehicle may be known. In these cases, no height information of the camera may need to be transmitted.

The positional data may further comprise an orientation (direction) of the camera. The orientation of the camera may be provided for example in the form of three rotation angles (pitch, yaw, roll). Alternatively, other formats may be used to represent the orientation of the camera. The orientation of the camera may be generated by a sensor of the camera or by a sensor of the road vehicle/roadside entity comprising the camera.

In addition to the positional data of the camera, additional camera data may be received. Such data may comprise, for example a radial lens distortion of the camera lens.

In step S106, coordinates of road lane boundaries are obtained. The coordinates may be global coordinates. The accuracy of the coordinates may be in the centimeter range. In other words, the coordinates precisely describe the real environment, e.g. the road lane boundaries.

The coordinates of the road lane boundaries may be received from an HD map, e.g., from a server storing the HD map data. Additionally, further data related to the road may obtained from the HD map, e.g., any data that may be used to determine a drivable road surface.

Obtaining the coordinates of the road lane boundaries may be based on the positional data of the camera. For example, all road lane boundary coordinates in a certain radius around the global coordinates of the camera may be obtained. Alternatively, all road lane boundary coordinates lying inside a triangle of the HD map may be obtained. The triangle may be determined based on the coordinates and orientation of the camera.

In step S108, road lane boundaries are projected onto the image based on the coordinates of the road lane boundaries and the positional data of the camera. In particular, when the road lane boundaries are represented as a number of points, each with attached coordinates, each point is projected onto the image (if the projection of the point lies inside the image).

Projection of the road lane boundaries onto the image based on the coordinates of the road lane boundaries and the positional data of the camera may comprise determining a camera plane based on the positional data of the camera. The camera plane (virtual image plane) may be a virtual plane in 3D space (e.g., in absolute coordinates) and may describe how the camera "sees" a scene, i.e., the real live scene captured on the image. The camera plane may be positioned in front of the camera with a distance corresponding to the focal length of the camera, depending on the camera's orientation.

Further, a radial distortion of the camera (i.e., the camera's lens system) may be taken into account when determining the virtual image plane, e.g., by applying a corresponding distortion function to the virtual image plane or to the coordinates of the road lane boundaries. This step may be particularly important when a camera may use a so called fish eye lens.

After determining the camera plane, the road lane boundaries may be projected onto the camera plane based on the positional data of the camera and the coordinates of the lane boundaries. In particular, a ray may be casted from the coordinates of the camera to the coordinates of a point of the road lane boundaries. Then, the intersection of this ray with the camera plane corresponds to the projection of the point of the road lane boundaries onto the camera plane. Likewise, the pixel corresponding to the point of intersection on the image may represent the projection of the point of the road lane boundaries onto the image.

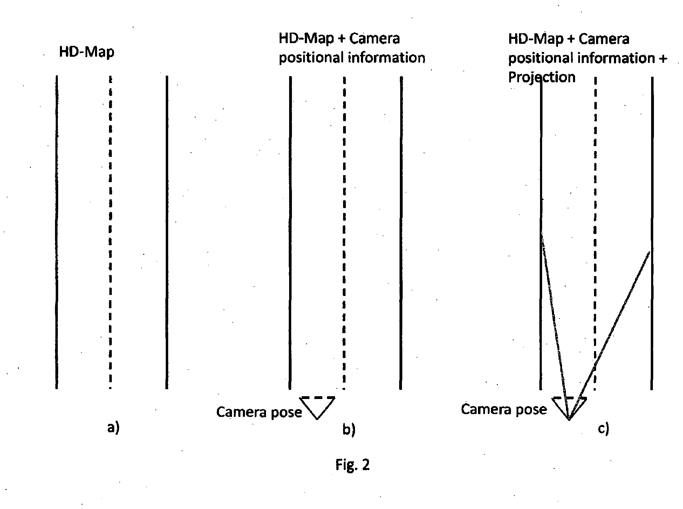

The process of projecting the road lane boundaries onto the image may also be depicted in Figs. 2 a) to c). While these figures show a scene in 2D for illustration purposes, the projection will be performed in 3D. In Fig. 2a) the road lane boundary coordinates obtained from the HD map are depicted. In Fig. 2b), the camera coordinates are added to the 2D/3D space, together with the camera's orientation. In a next step, the camera plane (virtual image plane) may be added (depicted by the dashed line of the triangle). Finally, in Fig. 2c), for each point of the road lane boundary, a ray is casted from the coordinates of the camera to the coordinates of the road lane boundary )depicted by two gray example rays). The intersections of the gray rays with the dotted line of the triangle may then represent the projection of the road lane boundaries onto the camera plane/the image. By projecting all points of the road lane boundaries onto the camera plane, road lane boundaries can be precisely determined in the image.

Next, in step S110, an annotated image is generated by annotating each pixel of the image inside the projected road lane boundaries as the drivable road. In particular, all pixels may be annotated if they are between two road lane boundaries of a same road lane.

Annotation of a pixel may be understood as the addition of metadata to the image, describing for each pixel, whether it represents a drivable road surface. Alternatively, a binary image may be generated in which each pixel representing a drivable road surface is represented by a 0 and the remaining pixels by a 1, or the other way around. Yet alternatively, pixels corresponding the drivable road surface may be marked by a specific color. The color may be transparent, i.e., the original image is still visible. A form of annotation may dependent on an application using the annotated image.

By using this process, a drivable road surface can be annotated in an image automatically without any need of a human supervisor. Further, the annotation may be very reliable, as it is independent of a quality of the image, the quality of the road and weather conditions.

In final step S112, the annotated image is provided for further processing. A particular relevant field for using the annotated image may be the training of a neural network for detecting a drivable surface. In particular, the image without annotation may be the input for the neural network, and the image with annotations may resemble the ground truth. Thereby, a neural network for detecting a drivable surface may be trained efficiently.

The usage of the annotated image may however not be limited to training of a neural network, but may be used for other automated tasks as well. For example, a roadside entity may detect that a vehicle is leaving the drivable road surface based on the annotated image and may act automatically, i.e., by transmitting a warning to the respective vehicle.

While the process of automatically annotating pixels may work well for any road structure and any weather conditions, images may additionally often comprise obstacles on the roads, e.g., humans. As obstacles on the roads should be avoided by autonomous vehicles, the training data for the drivable road detection neural network should also exclude any obstacles from the drivable road surface. To achieve this, an obstacle detection method may be added to the annotation method 100.

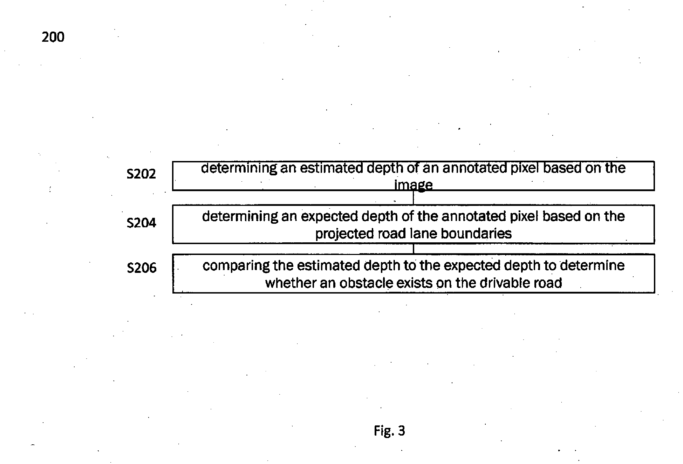

Fig. 3 depicts a flowchart of an example method 200 for detecting an obstacle on the drivable road surface of the image. Method 200 may either be performed after pixels have already been annotated, and the annotation may be removed depending on the outcome of method 200, or method 200 may be performed as part of step S110, i.e., pixels are excluded from annotation based on the outcome of method 200. In the following, the first case is described.

In step S202, an estimated depth of an annotated pixel is determined based on the image. In particular, the depth may be estimated for each annotated pixel, i.e., for each pixel that has been determined to correspond to a drivable road surface. Alternatively, a method for detecting objects in an image may be used, e.g., a neural network. Then, the depth is only estimated for a pixels corresponding to drivable road surface and corresponding to an object. In other words, depth estimation is only performed for pixels corresponding to a drivable road surface that is obscured by an obstacle.

Estimation of the depth of each pixel may be performed by any one of the following three methods:

### Image-Only Depth Estimation

Image-only depth estimation relies on a single 2D image as input and leverages machine learning, particularly deep neural networks, to infer depth. Techniques such as convolutional neural networks (CNNs) are trained on large datasets to recognize depth cues like object size, perspective, and shading. Transformer architectures or self-supervised learning may also be used to improve accuracy without requiring depth-annotated data.

Therefore, a depth of a pixel can be estimated solely on the already existing image.

### Stereo Image Depth Estimation

Stereo image depth estimation uses two images captured simultaneously from slightly different perspectives, mimicking human binocular vision. By analyzing the disparity between corresponding points in the images, algorithms may calculate depth directly. Additionally, trained neural networks may be used to improve the results.

In this case, two images may be needed from two cameras positioned in the road vehicle or roadside entity such that human binocular vision is imitated.

### Lidar-Based Depth Estimation

Lidar (Light Detection and Ranging) systems use laser pulses to measure distances directly by calculating the time-of-flight of the emitted light. The Lidar sensor emits laser pulses and measures the time it takes for them to return, generating a 3D point cloud. Each point in the cloud has a (x, y, z) coordinate in the sensor's coordinate system. To map the point cloud information to the image, the 3D points in the Lidar point cloud are projected onto the image plane, i.e., a similar process as in step S108 has to be performed. Notably, the process will be limited to the pixels annotated as drivable road surface.

The result is an image with highly accurate depth data for all annotated pixels.

In step S204, an expected depth of the annotated pixel is determined based on the projected road lane boundaries. Similar to step S202. the expected depth may be calculated for all annotated pixels or only for pixels corresponding to an obstacle, which has been detected by an object detection algorithm.

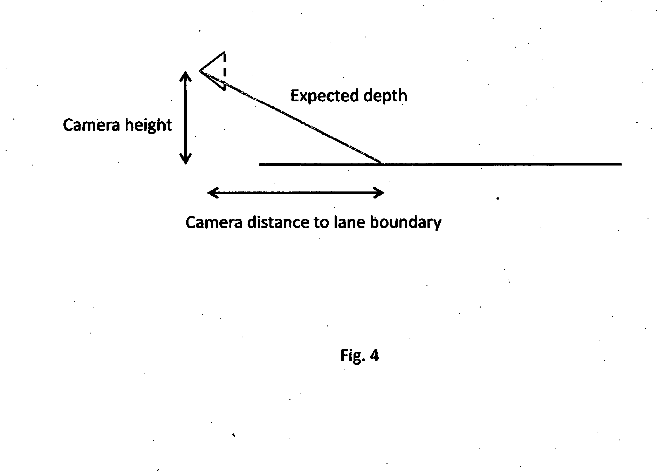

An example for this process is depicted in Fig. 4. Through the global coordinates of the road lane boundaries and the camera, a distance (in 2D) between the camera and the lane boundary is known. Further, as the height of the camera may either be known or the information concerning the camera height is received, the distance from of the camera to a point on the road lane boundary can be exactly calculated with simple geometry. Further, as the point as been projected onto the image, the determined distance can be used as an expected depth of the corresponding pixel. For the remaining pixels, i.e., pixels representing the drivable road surface between the road lane boundaries, the expected depth may be determined based on a distance of the point, corresponding to the pixel, from the road lane boundary. Alternatively, the pixel depths of the points between the road lane boundaries may be determined based on interpolation of the depth values of the pixels corresponding to road lane boundaries. In other words, the road is assumed to be a 2D plane.

In step S206, the estimated depth is compared to the expected depth to determine whether an obstacle exists on the drivable road. The determination whether an obstacle exists on the drivable road may be based on a predefined threshold, i.e., if the expected depth and the estimated depth for a particular pixel may be larger than the predefined threshold, it is determined that an obstacle exists on the drivable road surface. Determining whether an obstacle exists on the drivable road may be further based on a z-buffer.

Then the determined obstacle should be excluded from the drivable road surface. In a straight forward implementation, each pixel for which the predefined threshold is exceeded is excluded for being annotated as a drivable road surface. Such an approach may be feasible for obstacles with a relative low height and comparatively large depth (in the viewing direction of the camera). Further, a pixels with a predefined distance from the excluded pixels may also be excluded from being annotated as drivable road surface to implement a save zone around the obstacle.

For objects with a relatively large height and a comparatively small depth (e.g. humans) a second threshold may be defined, wherein when the difference between the expected threshold and the estimated threshold exceeds this threshold, the pixel may not be excluded from the drivable road surface. Thereby, a high obstacle may not influence the drivable road surface annotation far behind the obstacle.

Through implementation of said obstacle detection and the corresponding annotation changes, an efficient automated annotation of a drivable road surface may be achieved, even if obstacles are positioned on the road.

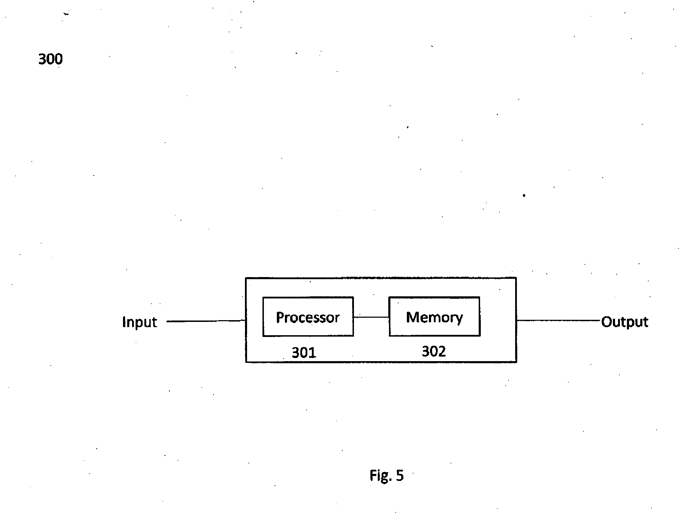

While a method of annotating road surface related pixels in an image has been described above, the disclosure likewise relates to corresponding apparatus, and the like. An embodiment providing such apparatus will be described next with reference to Fig. 5.

As shown in Fig. 5, the apparatus 300 includes a processor 301 and memory 302. The memory 302 is configured to store program code. The processor 301 is configured to run instructions in the program code, so that the apparatus 300 performs the annotation of pixels methods in any one of the above embodiments and implementations. The processor 301 may also receive, among others, suitable input data (e.g., image, positional data of the camera, coordinates of lane boundaries etc.), depending on use cases and/or implementations. The processor 301 may be adapted to carry out the methods/techniques (e.g., methods 100 and 200 as illustrated above with reference to Figs. 1 and 3, respectively) described throughout the present disclosure and to generate corresponding output data (e.g., an annotated image), depending on use cases and/or implementations. The apparatus may be part of a sever, e.g., a cloud infrastructure. Alternatively, the apparatus may be part of the road vehicle or the roadside entity.

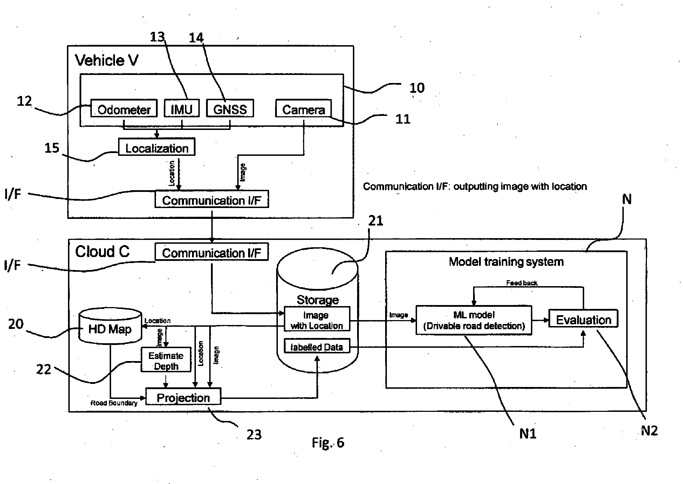

Finally, Figs. 6 illustrates an example system for annotating road surface related pixels in an image. The system comprises two main components, namely a vehicle V (or alternatively a roadside entity) and the cloud C (i.e. a server structure that may be spread around multiple locations).

The vehicle V may comprise a sensor unit 10 for producing the image and the corresponding positional data. Therefore, the sensor unit 10 may comprise one or more cameras 11 and additional sensors which may be used for localization 15, e.g., an odometer 12, an IMU 13, and/or a GNSS unit 14. The vehicle V may communicate the image together with the corresponding positional data to the cloud C via communication I/F (I/F).

The cloud C may include the HD map 20, i.e., the HD map data may be available in the cloud C. From the HD map data, the relevant parts (i.e., the road lane boundaries) may be obtained based on the positional data received together with the image. An apparatus in the cloud, e.g., apparatus 300, may then use the available information, i.e., the HD map data of the road lane boundaries, the image and the positional data of the camera to perform method 100, and optionally method 200. The annotated image (labelled data) may then be stored in a storage unit 21 in the cloud C together with the original image, i.e., the image without annotations, where an estimation depth unit 22 and a projection unit 21 for, i.a., generating the labelled data can also be part of the cloud C. Both images may then be used to train (in the cloud) a neural network N (which may include one or more machine learning models N1 and evaluation unit(s) N2) for detecting a drivable road surface on images. In particular, the image without annotations may be used as input to the neural network N, while the image with annotations is used to evaluate the result of the neural network N, and to adapt the weights of the neural network N based on the evaluation.

Thereby, efficient training data for a drivable road surface detecting neural network N may be generated.

### Interpretation

Unless specifically stated otherwise, as apparent from the following discussions, it is appreciated that throughout the present invention discussions utilizing terms such as "processing", "computing", "calculating", "determining", "analyzing" or the like, refer to the action and/or processes of a computer or computing system, or similar electronic computing devices, that manipulate and/or transform data represented as physical, such as electronic, quantities into other data similarly represented as physical" quantities.

Reference throughout this invention to "one example embodiment", "some example embodiments" or "an example embodiment" means that a particular feature, structure or characteristic described in connection with the example embodiment is included in at least one example embodiment of the present invention. Thus, appearances of the phrases "in one example embodiment", "in some example embodiments" or "in an example embodiment" in various places throughout this invention are not necessarily all referring to the same example embodiment. Furthermore, the particular features, structures or characteristics may be combined in any suitable manner, as would be apparent to one of ordinary skill in the art from this invention, in one or more example embodiments.

As used herein, unless otherwise specified the use of the ordinal adjectives "first", "second", "third", etc., to describe a common object, merely indicate that different instances of like objects are being referred to and are not intended to imply that the objects so described must be in a given sequence, either temporally, spatially, in ranking, or in any other manner.

Also, it is to be understood that the phraseology and terminology used herein are for the purpose of description and should not be regarded as limiting. The use of "including," "comprising," or "having" and variations thereof are meant to encompass the items listed thereafter and thereof as well as additional. Unless specified or limited otherwise, the terms "mounted", "connected", "supported", and "coupled" and variations thereof are used broadly and encompass both direct and indirect mountings, connections, supports, and couplings.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

It is furthermore noted that examples of the present disclosure may take the form of an entirely hardware example, an entirely software example (including firmware, resident software, micro-code, etc.), or an example combining software and hardware aspects. Furthermore, examples of the present disclosure may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally may indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

Aspects/examples are described hereinabove with reference to flowchart illustrations and/or block diagrams of methods and apparatuses and the like. It will be understood that each block of the flowchart illustrations and/or block diagrams, and/or combinations of blocks in the flowchart illustrations and/or block diagrams can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

These computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment.

Communication networks generally may include public and/or private networks; may include local-area, wide-area, metropolitan-area, storage, and/or other types of networks; and may employ communication technologies including, but in no way limited to, analogue technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclosure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternative embodiments may, as appropriate, employ variations of such communication protocols (e.g., modifications or extensions of the protocol that may be made from time-to-time) or other protocols either known or developed in the future.

It should also be noted that logic flows may be described herein to demonstrate various aspects and should not be construed to limit the disclosure to any particular logic flow or logic implementation. The described logic may be partitioned into different logic blocks (e.g., programs, modules, functions, or subroutines) without changing the overall results.

Often times, logic elements may be added, modified, omitted, performed in a different order, or implemented using different logic constructs (e.g., logic gates, looping primitives, conditional logic, and other logic constructs) without changing the overall results.

The present disclosure may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g.; forms generated by an assembler, compiler, linker, or locator).

Source code may include a series of computer program instructions implemented in any of various programming languages (e.g., an object code, an assembly language, or a high-level language such as Fortran, C, C++, JAVA, or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of embodiments may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" may refer generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analogue technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some aspects may be implemented as a combination of both software (e.g., a computer program product) and hardware. Still other embodiments of the may be implemented as entirely hardware, or entirely software.

While certain exemplary aspects have been described and shown in the accompanying drawings, it is to be understood that such aspects are illustrative, and that the examples are not limited to the specific constructions and arrangements shown and described, since various other changes, combinations, omissions, modifications and substitutions, in addition to those set forth in the above paragraphs, are possible.

Those skilled in the art will appreciate that various adaptations, modifications, and/or combination of the just described embodiments can be configured. Therefore, it is to be understood that, within the scope of the appended claims, the disclosure may be practiced other than as specifically described herein. For example, unless expressly stated otherwise, the steps of processes described herein may be performed in orders different from those described herein and one or more steps may be combined, split, or performed simultaneously. Those skilled in the art will also appreciate, in view of this disclosure, that different examples or aspects described herein may be combined to form other examples.

It should be appreciated that in the above description of example embodiments of the present invention, various features of the present invention are sometimes grouped together in a single example embodiment, Fig., or description thereof for the purpose of streamlining the present invention and aiding in the understanding of one or more of the various inventive aspects. This method of invention, however, is not to be interpreted as reflecting an intention that the claims require more features than are expressly recited in each claim. Rather, as the following claims reflect, inventive aspects lie in less than all features of a single foregoing disclosed example embodiment. Thus, the claims following the Description are hereby expressly incorporated into this Description, with each claim standing on its own as a separate example embodiment of this invention.

Furthermore, while some example embodiments described herein include some but not other features included in other example embodiments, combinations of features of different example embodiments are meant to be within the scope of the present invention, and form different example embodiments, as would be understood by those skilled in the art. For example, in the following claims, any of the claimed example embodiments can be used in any combination.

In the description provided herein, numerous specific details are set forth. However, it is understood that example embodiments of the present invention may be practiced without these specific details. In other instances, well-known methods, structures and techniques have not been shown in detail in order not to obscure an understanding of this description.

Thus, while there has been described what are believed to be the best modes of the present invention, those skilled in the art will recognize that other and further modifications may be made thereto without departing from the spirit of the present invention, and it is intended to claim all such changes and modifications as fall within the scope of the present invention. For example, any formulas given above are merely representative of procedures that may be used. Functionality may be added or deleted from the block diagrams and operations may be interchanged among functional blocks. Steps may be added or deleted to methods described within the scope of the present disclosure.

## Claims

1. A method of annotating pixels of an image corresponding to a drivable road, the method comprising:
obtaining the image, wherein the image comprises a road;
obtaining positional data of a camera that has produced the image;
obtaining coordinates of road lane boundaries;
projecting the road lane boundaries onto the image based on the coordinates of the road lane boundaries and the positional data of the camera,
generating an annotated image by annotating each pixel of the image inside the projected road lane boundaries as the drivable road; and
providing the annotated image for further processing.

2. The method of claim 1, wherein providing the annotated image for further
processing comprises providing the annotated image as training data for a drivable road detection neural network.

3. The method of claims 1 or 2, wherein the coordinates of the road lane boundaries are global coordinates obtained from a High Definition, HD map.

4. The method of any previous claim, wherein obtaining the coordinates of the road lane boundaries is based on the positional data of the camera.

5. The method of any previous claim, wherein the positional data of the camera comprises global coordinates of the camera, a direction of the camera and a height of the camera.

6. The method of any previous claim, wherein the camera is part of a road vehicle or part of a roadside entity.

7. The method of any previous claim, wherein projecting the road lane boundaries onto the image based on the coordinates of the lane boundaries and the positional data of the camera comprises:
determining an image plane based on the positional data of the camera; and
projecting the road lane boundaries onto the image plane based on the positional data of the camera and the coordinates of the road lane boundaries.

8. The method of claim 7, wherein determining the image plane is further based on radial distortions of the camera.

9. The method of any previous claim, wherein annotating each pixel of the image inside the projected road lane boundaries as the drivable road comprises annotating a pixel of the image as the drivable road if the pixel is between two projected road lane boundaries of a same road lane.

10. The method of any previous claim, wherein annotating each pixel of the image inside the projected road lane boundaries as the drivable road further comprises:
determining an obstacle on the drivable road; and
excluding each pixel corresponding to the obstacle from the annotated pixels.

11. The method of claim 10, wherein determining an obstacle on the drivable road comprises:
determining an estimated depth of an annotated pixel based on the image;
determining an expected depth of the annotated pixel based on the projected road lane boundaries;
comparing the estimated depth to the expected depth to determine whether an obstacle exists on the drivable road.

12. The method of claim 11, wherein determining the estimated depth is further based on a second image from a second camera, wherein the second image and the image form stereo images; or
determining the estimated depth is further, based on LIDAR data of an environment captured in the image.

13. The method of claims 11 or 12, wherein comparing the estimated depth to the expected depth to determine whether an obstacle exists on the drivable road is based on a threshold.

14. An apparatus, comprising a processor and a memory coupled to the processor, wherein the processor is adapted to carry out the method according to any one of claims 1 to 13.

15. The apparatus of claim 14, wherein the apparatus is comprised by a server, a road vehicle, and/or a roadside entity.
